**Europäisches Patentamt**

**European Patent Office**

**Office européen des brevets**

(11) Veröffentlichungsnummer: **0 080 056**
A2

# (12) EUROPÄISCHE PATENTANMELDUNG

(21) Anmeldenummer: **82109454.7**

(22) Anmeldetag: **13.10.82**

(51) Int. Cl.³: **G 01 D 5/20**

(30) Priorität: **20.11.81 DE 3145935**

(43) Veröffentlichungstag der Anmeldung: **01.06.83**
Patentblatt 83/22

(84) Benannte Vertragsstaaten: **CH DE FR GB IT LI SE**

(71) Anmelder: **VACUUMSCHMELZE GMBH, Bereich Verträge und Patente Grüner Weg 37 Postfach 2253, D-6450 Hanau/Main 1 (DE)**

(72) Erfinder: **Erd, Ludwig, Dipl.-Ing., Havelbergerstrasse 17, D-1000 Berlin 21 (DE)**
Erfinder: **Maiwald, Dieter, Dipl.-Ing., Brusebergstrasse 29, D-1000 Berlin 51 (DE)**
Erfinder: **Menzel, Klaus, Dipl.-Ing., Remstalerstrasse 26, D-1000 Berlin 28 (DE)**

(54) **Elektromagnetischer Wegsensor mit Mehrfachabtastung.**

(57) Zur elektromagnetischen Erfaßung von Geschwindigkeiten beweglicher Teile ist es bekannt, als elektromagnetischen Wegsensor eine Spule (3) mit vormagnetisiertem Weicheisenkern (2) in der Nähe eines Zahnrades oder eines anderen, den magnetischen Rückschluß des Weicheisenkerns (2) beeinflussenden bewegten Körpers (1) anzubringen.

Hier besteht die Aufgabe, einen Wegsensor anzugeben, mit dem sich unterschiedliche Informationen über die Bewegung eines Körpers erfassen lassen. Diese Aufgabe wird mit einem Weicheisenkern (2) und einer Spule (3) gelöst, indem mehrere Stirnseiten für den Weicheisenkern (2) mit jeweils einem Dauermagneten (4, 5) versehen und in der Nähe von Bereichen des bewegten Körpers (1) angeordnet sind, die unterschiedliche ferromagnetische Teilungen besitzen. Beispielsweise kann mit einem derartigen Wegsensor die Winkellage einer Welle relativ zu einem Bezugspunkt erfaßt werden.

ACTORUM AG

0080056

Vacuumschmelze GmbH                    VP 81 P 9570
Hanau

## Elektromagnetischer Wegsensor mit Mehrfachabtastung

Die Erfindung betrifft einen elektromagnetischen Wegsensor mit Mehrfachabtastung zur Umsetzung der Bewegung eines mit einer ferromagnetisch wirksamen Teilung versehenen bewegten Körpers (Zahnrad, Zahnstange, Stift) in eine elektrische Spannung mit einem in der Nähe des bewegten Körpers angeordneten, mit einer Spule umwickelten Weicheisenkern und mit einem Dauermagneten, der an einer Stirnseite des Weicheisenkerns angeordnet ist.

Ein derartiger Wegsensor ist aus BOSCH-Technische Berichte 7, (1980), Ausgabe 2, auf Seite 85, bekannt. Je nach Stellung der Zähne des Impulsrades relativ zum Weicheisenkern des Wegsensors wird der von einem Dauermagneten erzeugte Fluß im Weicheisenkern verstärkt oder geschwächt. Die dadurch resultierenden Spannungsschwankungen in einer den Weicheisenkern umgebenden Spule können zur Erfassung der am Wegsensor vorbeigeführten Zähnezahl und damit zur Bestimmung der Geschwindigkeit des Impulsrades herangezogen werden.

Aufgabe der vorliegenden Erfindung ist es, einen Wegsensor anzugeben, bei dem sich unter Verwendung einer einzigen Spule nicht nur die Bewegung bzw. Drehung eines bewegten Körpers messen läßt, sondern bei dem außerdem diese Bewegung relativ zu bestimmten Bezugspunkten des bewegten Körpers erfaßbar ist.

4.10.1982 C/Bz

Erfindungsgemäß wird diese Aufgabe dadurch gelöst, daß der Weicheisenkern mindestens zwei mit mindestens je einem Dauermagneten versehene Stirnseiten besitzt und daß die Dauermagnete in der Nähe von Bereichen des bewegten Körpers mit räumlich unterschiedlicher ferromagnetischer Teilung angeordnet sind.

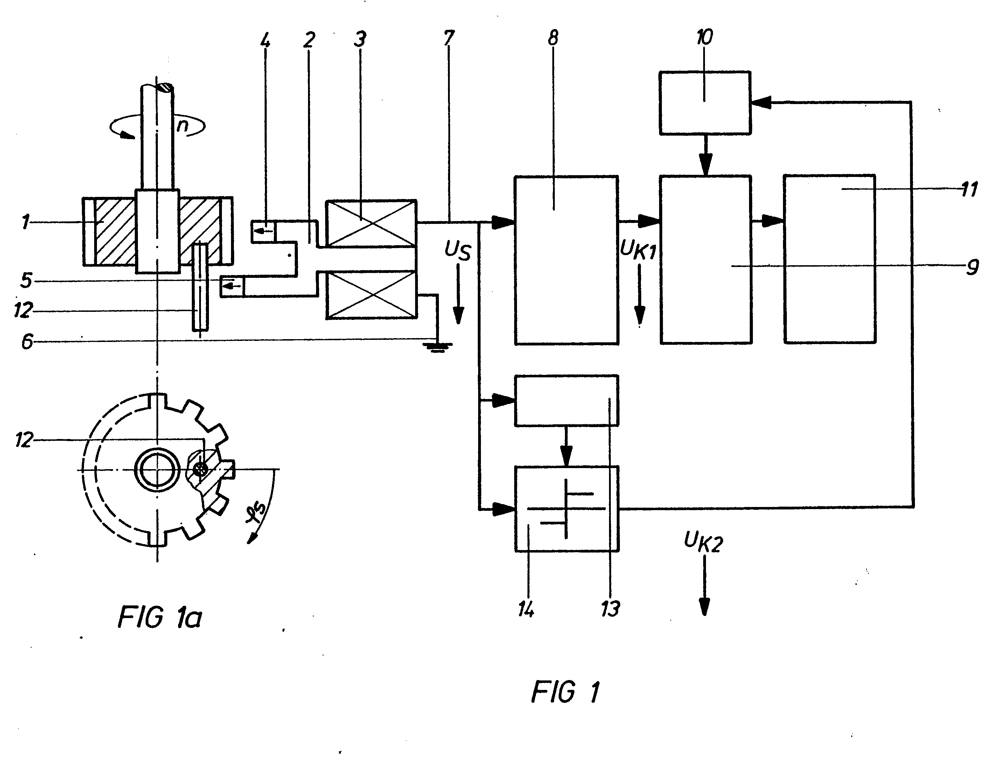

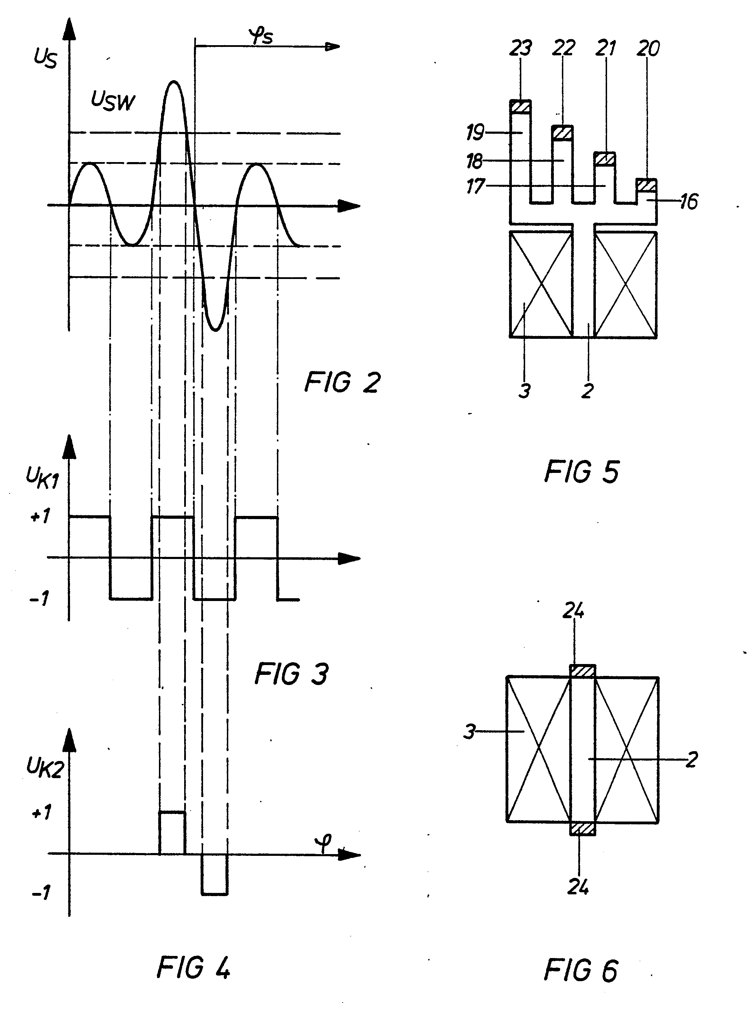

Ein Ausführungsbeispiel ist in Figur 1 dargestellt. Die Figuren 2 bis 4 zeigen Spannungen, wie sie an bestimmten Stellen der Auswerteschaltung im Ausführungsbeispiel nach Figur 1 vorkommen. In den Figuren 5 und 6 sind weitere mögliche Ausgestaltungen des Wegsensors dargestellt.

Im Ausführungsbeispiel nach Figur 1 ist ein Wegsensor beschrieben, der Lage und Drehgeschwindigkeit eines bewegten Körpers 1, der hier aus einem Zahnrad besteht, erfassen kann. Der bewegte Körper besitzt einerseits Zähne mit dazwischenliegenden Zahnlücken, die entweder ferromagnetisch oder mit einem ferromagnetischen Belag versehen sind, andererseits ragt aus einer Stirnseite des bewegten Körpers 1 exzentrisch ein Stift 12 aus ferromagnetischem Material heraus. Der Wegsensor enthält einen Weicheisenkern 2, um den eine Spule 3 gewickelt ist. Der Weicheisenkern 2 teilt sich zwischen Spule 3 und dem bewegten Körper 1 in zwei zueinander parallele Schenkel unterschiedlicher Länge auf. Jede Stirnseite der so gebildeten parallelen Schenkel ist mit einem Dauermagneten 4 bzw. 5 versehen.

Wie aus Figur 1a ersichtlich ist, ist der Stift 12 relativ zu den Zähnen des als bewegter Körper 1 verwendeten Zahnrades so angeordnet, daß die Dauermagnete 4 und 5 gleichzeitig einen verbesserten magnetischen Rückschluß für ihr Feld erfahren, wenn der Stift 12 an dem Dauergneten 5 vorbeibewegt wird. Aus diesem Grunde wird die Magnetisierungsrichtung beider Dauermagnete 4 und 5 gleichsinnig gewählt. Falls der Stift 12 gleichzeitig mit einer Zahnlücke wirksam würde, müßte die Magnetisierungsrichtung eines der beiden Dauermagnete umgekehrt werden, damit die Addition der induzierten Spannungen in der Spule 3 zu einer auswertbaren Anhebung des Maximalwertes führt.

Die Spule 3 besitzt einen mit Erde verbundenen Anschluß 6 und einen Anschluß 7, der an einen Komparator 8 zur Erfassung der Nulldurchgänge der Spannung angeschlossen ist. Am Eingang des Komparators 8 ergibt sich damit die Spannung $U_S$, deren Verlauf in Figur 2 dargestellt ist. Der Komparator 8 ist so aufgebaut, daß er jeweils eine konstante positive oder negative Spannung abgibt, abhängig davon, ob die Spannung $U_S$ an der Spule 3 positiv oder negativ ist. Am Ausgang des Komparators 8 erhält man damit eine Rechteckspannung, wie sie als $U_{K1}$ in Figur 3 dargestellt ist. Diese Spannung $U_{K1}$ gelangt an den Eingang eines Zählers 9, der von einem Zeitgeber 10 für die Bestimmung von Meßintervallen beeinflußt wird. Im Zähler 9 wird durch Zählung der Eingangsimpulse die Anzahl der Nulldurchgänge der Spannung $U_S$ der Spule 3 ermittelt. Dieser Zähler ist einer Auswertungseinrichtung 11 vorgeschaltet, in der in bekannter Weise aufgrund des Zählerstandes die Drehzahl bzw. Bewegungsgeschwindigkeit oder Drehwinkel des bewegten Körpers 1 ermittelt werden kann.

Figur 2 zeigt, daß beim Vorbeiführen des Stiftes 12 am Dauermagneten 5 eine verstärkte Änderung des magnetischen Flusses in der Spule 3 auftritt, die zu einem höheren Maximalwert der Spannung $U_S$ am Ausgang der Spule 3 führt.

Um diesen Zeitpunkt zu erfassen und um damit ein eindeutiges Maß für die absolute Lage des bewegten Körpers unabhängig vom Einschaltzeitpunkt der Meßeinrichtung zu bekommen, ist an den Anschluß 7 der Spule 3 ein Komparator 14 angeschlossen. Dieser muß eine Schwellspannung erhalten, die oberhalb des Maximalwertes der durch die Zähne des bewegten Körpers 1 induzierten Spannung liegt und der kleiner ist als der Maximalwert der Spannung $U_S$, der sich beim Vorbeiführen des Stiftes 12 am Dauermagneten 5 ergibt. Unter dieser Voraussetzung erhält man am Ausgang des Komparators 14 eine Spannung $U_{K2}$, wie sie in Figur 4 dargestellt ist. Die Spannung $U_{K2}$ gelangt an den Zeitgeber 10 und veranlaßt diesen, den Zähler 9 zu starten oder zu stoppen.

Da Frequenz und Amplitude der in der Spule 3 induzierten Spannung $U_S$ sich mit der Drehzahl bzw. Bewegungsgeschwindigkeit des bewegten Körpers 1 ändert, ist es besonders vorteilhaft, wenn man für den Komparator 14 einen von der Drehzahl abhängigen Schwellwert vorsieht. Dies ist in Figur 1 dadurch gelöst, daß an den Anschluß der Spule 3 zusätzlich ein Gleichrichter 13 mit Mittelwertbildner angeschlossen ist, der aus der Spannung $U_S$ die für den Komparator 14 notwendige Schwellwertspannung $U_{SW}$ liefert. Der Gleichrichter mit Mittelwertbildner liefert als Ausgangsspannung die Schwellwertspannung $U_{SW}$ für den Komparator 14. Diese muß-z.B. durch einen Spannungsteiler - zwischen dem Maximalwert der Spannung $U_S$ und dem Maximalwert der nur durch die Zähne des bewegten Körpers 1 induzierten Wechselspannung liegen. Hierdurch wird sichergestellt, daß der Schwellwert des Komparators 14 auch bei schwankenden Amplituden der Spannung $U_S$ der Spule 3 so liegt, daß Ausgangsimpulse am Ausgang des Komparators 14 nur dann auftreten, wenn der Stift 12 am Dauermagneten 5 vorbeigeführt wird.

Weitere Möglichkeiten für die Ausgestaltung des Wegsensors sind in den Figuren 5 und 6 dargestellt.

In Figur 5 teilt sich der Weicheisenkern 2 in vier parallele Schenkel 16 bis 19 auf, an deren Stirnseiten je ein Dauermagnet 20 bis 23 befestigt ist.

Figur 6 zeigt eine Lösung, bei der die beiden ohnehin vorhandenen Stirnseiten des Weicheisenkerns 2 mit je einem Dauermagneten 24, 25 versehen sind. Hier müssen Bereiche des bewegten Körpers 1 mit unterschiedlicher ferromagnetischer Teilung an beiden Seiten der Spule vorbeigeführt werden.

Patentansprüche

1. Elektromagnetischer Wegsensor mit Mehrfachabtastung zur Umsetzung der Bewegung eines mit einer ferromagnetisch wirksamen Teilung versehenen bewegten Körpers (1) (Zahnrad, Zahnstange, Stift) in eine elektrische Spannung mit einem in der Nähe des bewegten Körpers (1) angeordneten, mit einer Spule (3) umwickelten Weicheisenkern (2) und mit einem Dauermagneten, der an einer Stirnseite des Weicheisenkerns (2) angeordnet ist, d a d u r c h   g e k e n n z e i c h n e t , daß der Weicheisenkern (2) mindestens zwei mit mindestens je einem Dauermagneten (4, 5) versehene Stirnseiten besitzt und daß die Dauermagnete (4, 5) in der Nähe von Bereichen des bewegten Körpers (1) mit räumlich unterschiedlicher ferromagnetischer Teilung angeordnet sind.

2. Elektromagnetischer Wegsensor nach Anspruch 1, d a d u r c h   g e k e n n z e i c h n e t , daß zur Auswertung der addierten Spannung ($U_S$) ein Komparator (14) vorgesehen ist, dessen Schwellwertspannung ($U_{SW}$) oberhalb des Maximums der Spannung liegt, die durch den Bereich mit enger ferromagnetischer Teilung in der Spule (3) induziert wird.

3. Elektromagnetischer Wegsensor nach Anspruch 1, d a d u r c h   g e k e n n z e i c h n e t , daß zur Auswertung des zurückgelegten Weges des bewegten Körpers (1) die Nullstellen der in der Spule (3) induzierten Spannung ($U_S$) in einem Zähler (9) aufsummiert werden.

0080056

4. Elektromagnetischer Wegsensor nach Anspruch 1, **d a d u r c h   g e k e n n z e i c h n e t ,** daß der Komparator (14) einen variablen Schwellwert besitzt, daß zur Vorgabe der Schwellwertspannung ($U_{SW}$) ein Gleichrichter (13) mit Mittelwertbildner an den Anschluß (7) der Spule (3) angeschlossen ist und daß der Komparator (14) – gegebenenfalls durch Einsatz eines Spannungsteilers – für die Spannung ($U_S$) eine Schwellwertspannung ($U_{SW}$) besitzt, die zwischen dem Maximalwert der durch die Zähne des bewegten Körpers (1) induzierten Spannung ($U_S$) und dem absoluten Maximalwert der der in der Spule (3) induzierten Spannung ($U_S$) liegt.

0080056

VP 81 P 9570

-1/2

FIG 1

FIG 1a

$U_{K1}$  $U_{K2}$  $U_S$

VP 81 P 9570  0080056

FIG 2

FIG 3

FIG 4

FIG 5

FIG 6